# EUROPÄISCHE PATENTANMELDUNG

(11) **EP 0 766 211 A2**
(43) Veröffentlichungstag der Anmeldung: **02.04.1997**
(21) Anmeldenummer: 96114369.0
(22) Anmeldetag: 09.09.1996
(51) Int. Cl.: G07F 7/10, G06K 19/073

(54) **Multifunktionale Chipkarte**

(30) Priorität: 29.09.1995 DE 19536169
(71) Anmelder: International Business Machines Corporation, Armonk, N.Y. 10504 (US)
(72) Erfinder: Gungl, Klaus, Dipl.-Phys., 71034 Böblingen (DE); Dao Trong, Son, Dr.-Ing., 70599 Stuttgart (DE)
(74) Vertreter: Schäfer, Wolfgang, Dipl.-Ing.

(57) **Zusammenfassung**

Beschrieben wird die Integration mehrerer Anwendungsprogramme auf einer Chipkarte, ohne daß die darauf gespeicherten Anwendungsprogramme Zugriff aufeinander haben, was durch eine Trennung und Entkopplung der einzelnen Programme untereinander erreicht wird.

Eine erste Ausführungsform weist mehrere zueinander unabhängige Einheiten, bestehend jeweils aus einer Prozessor-Einheit und einer Speichereinheit, auf. Eine Kommunikation dieser unabhängigen Einheiten mit der Außenwelt und auch untereinander erfolgt über eine Steuereinheit. Eine Kommunikation der unabhängigen Einheiten untereinander kann nur über die jeweiligen Prozessor-Einheiten erfolgen, so daß auf die angeschlossenen Speichereinheiten nicht unter Umgehung der entsprechenden Prozessor-Einheit zugegriffen werden kann.

In einer weiteren Ausführungsform erfolgt die Trennung unterschiedlicher Anwendungen auf einer Chipkarte mit nur einem Prozessor durch die Einfügung einer Separation der Anwendungsteile im Speicherbereich der Chipkarte. Die Separation bewirkt, daß jede Anwendung nur auf einen festlegbaren Bereich innerhalb des Speichers zugreifen kann, und daß Zugriffe außerhalb des vorgegebenen Speicherbereiches für diese Anwendung unterbunden werden.

## Beschreibung

### Gebiet der Erfindung

Die Erfindung betrifft die Integration mehrerer Anwendungen auf einer Chipkarte.

### Stand der Technik

Als Datenträgerkarten oder Chipkarten werden heute tragbare Karten, zumeist in etwa in Scheckkartenformat und vorzugsweise aus Kunststoff oder Metall, mit einem darin integrierten elektronischen Chip, bezeichnet. Man unterscheidet zwischen einfachen Speicherkarten (die als Memory Chip-Cards oder Memory-Cards bekannt sind) und intelligenten Datenträgerkarten (auch multifunktionale Chipkarten, oder Smart-Cards genannt), die neben einem Speicherbereich einen eigenen Prozessor zur Kontrolle der auf dem Chip der Datenträgerkarte gespeicherten Daten. Dies erlaubt einen besseren Schutz der Daten und führt zu einer verbesserten Funktionalität der Chipkarten. Einfache Speicherkarten erlauben im allgemeinen nur ein Schreiben und Lesen der Daten. Intelligente Datenträgerkarten verfügen darüber hinaus noch über Funktionen zur Strukturierung der Daten, zur Lokalisierung der Daten, zur Verwaltung der Daten und zum Schutz der Daten.

Typischerweise enthält eine Chipkarte einen Chip, auf dem ein Mikroprozessor und ein Speicher integriert sind. Der Speicher ist weiterhin in eine Vielzahl einzelner Bereiche aufgeteilt, die je nach Funktion unterschiedlich implementiert werden.

Als einen ersten Speicherbereich enthält die Chipkarte einen nicht-flüchtigen und nicht-beschreibbaren Speicher, der zumeist als ein ROM (Read Only Memory) ausgeprägt ist und im weiteren auch als ROM bezeichnet werden soll. Das ROM enthält im allgemeinen das Betriebssystem der Chipkarte. Weiterhin werden im ROM Programme gespeichert, die allgemeine Funktionen haben, wie z. B. einen Datenstrom umwandeln, kodieren oder zur Durchführung einer Ein-/Ausgabe mit einem Automaten (z. B. mittels eines 'Handshake'-Verfahrens mit einem Geldautomaten) vorgesehen sind.

Als einen weiteren Speicherbereich weist die Chipkarte einen nicht-flüchtigen, beschreibbaren Speicher auf, der im allgemeinen als EEPROM (Electrical Eraseable Programmable Read Only Memory) oder als EPROM (Electrical Programmable ROM) oder als OT/PROM (One Time PROM) ausgeprägt ist. Der Einfachheit halber soll im folgenden der nicht-flüchtige beschreibbare Speicher als EEPROM bezeichnet werden, ohne daß damit eine Beschränkung der nicht-flüchtigen beschreibbaren Speicher nur auf EEPROMs gemeint ist. In dem EEPROM werden im allgemeinen Anwendungsprogramme für Anwendungen mit der Chipkarte gespeichert.

Schließlich weist die Chipkarte im allgemeinen noch einen flüchtigen, beschreibbaren Speicher auf, der meist als RAM (Random Access Memory) ausgeprägt ist und im folgenden als RAM bezeichnet werden soll. Der RAM dient als Arbeitsspeicher für den Mikroprozessor der Chipkarte, insbesondere zur Zwischenspeicherung von Daten.

Das Funktionsprinzip der Chipkarte soll am Beispiel einer Bargeld-Chipkarte erläutert werden. Nach Einführen der Chipkarte in einen Geldautomaten wird der Mikroprozessor der Chipkarte über die Chipkartenkontakte an den Automaten angeschlossen und in Betrieb genommen. Für den Datenaustausch ('Handshaking') schickt die Chipkarte in einem ersten Schritt eine Zufallszahl an den Automaten. Der Automat verschlüsselt in einem zweiten Schritt diese Zufallszahl und schickt sie als chiffrierte Zahl an die Chipkarte zurück. In einem dritten Schritt dechiffriert die Chipkarte die empfangene Zahl mit Hilfe eines Schlüssels und vergleicht das empfangene Ergebnis mit einem vorberechneten Ergebnis. Die Zufallszahl sowie die dechiffrierten Berechnungen sind hierfür im Arbeitsspeicher der Chipkarte (RAM) gespeichert. Der Chiffrierschlüssel hingegen ist im ROM abgelegt, da dieser Schlüssel besonders geschützt werden muß, um Manipulationen zu vermeiden.

In einem vierten Schritt schickt der Automat eine Zufallszahl an die Chipkarte, die die Chipkarte wiederum in einem fünften Schritt chiffriert und an den Automaten zurückschickt. Die Dechiffrierung auf der Automatenseite erfolgt in einem sechsten Schritt ähnlich dem im dritten Schritt. Ist der Vorgang bis an diese Stelle erfolgreich abgelaufen, sind die Chipkarte und der Automat bereit für einen Datenaustausch, wobei der Datenaustausch im allgemeinen mit verschlüsselten Daten erfolgt. Hierfür wird ein entsprechendes, in der Chipkarte gespeichertes, Anwendungsprogramm aufgerufen. Als Anwendung soll hier in diesem Beispiel ein Geldnachladen mit einer bestimmten Summe durchgeführt werden. Der Automat erfragt hierfür von der Chipkarte, welche Anwendung durchgeführt werden soll, und die Chipkarte antwortet hierauf: "Geld nachladen". Weiterhin erfragt der Automat die Summe, die nachgeladen werden soll und erhält als Antwort von der Chipkarte den gewünschten Betrag genannt. An dieser Stelle wird von dem Anwendungsprogramm auf der Chipkarte ein Befehl ausgegeben, einen entsprechenden Bereich in dem EEPROM mit der gewünschten Bargeldsumme neu zu beschreiben.

An diesem Beispiel wird deutlich, daß das Anwendungsprogramm nach seinem Aufruf die 'Gewalt' über die Chipkarte, also auch über die auf der Chipkarte gespeicherten Daten, übernimmt. Bislang wird auf jeder Chipkarte jeweils nur eine Anwendung implementiert. Sollen jedoch mehrere Anwendungsprogramme auf einer Chipkarte geladen werden, muß für solche Anwendungen, die sensitive Daten beinhalten, ein Schutz gewährleistet werden, damit weder diese sensitive Daten, noch eventuell das gesamte Anwendungsprogramm, ausgelesen werden kann. Die Problematik bei der Verwendung von Chipkarten mit mehreren Anwendungsprogrammen (den sogenannten Multifunktions- oder multifunktionalen Chipkarten) ist, daß dem Betreiber einer Anwendung (z. B. eine Bank) ein Zugang zu dem Anwendungsprogramm eingeräumt werden muß. Hat er jedoch über das Anwendungsprogramm erst einmal Zugang zu der Chipkarte erhalten, und wird ihm somit mittels des Anwendungsprogrammes die Verfügungsgewalt über die Chipkarte erlaubt, kann er sich auf der Chipkarte "frei bewegen". Er kann, wenn er die Absicht dazu hat, sein Anwendungsprogramm so schreiben, daß das Programm neben der gedachten Funktion auch andere Aktivitäten ausüben kann, ohne daß der Eigentümer oder Benutzer der Chipkarte es merkt, bzw. merken kann. Dabei kann der Betreiber des Anwendungsprogrammes auch Geheimnisse von anderen Anwendungsprogrammen heraus bekommen, wie z. B. Geheimschlüssel oder Art und Umfang der Aktivitäten der anderen Anwendungsprogramme. Umgekehrt kann ein anderer Betreiber eines anderen Anwendungsprogrammes oder einer, der sich als solcher ausgibt, in die Geheimnisse anderer Anwendungen hineinschauen und seine Anwendung entsprechend modifizieren, z. B. durch die Kenntnis der Funktionsweise einer Bargeldanwendung Geld mißbräuchlich auf die Karte zu laden.

Aus dem IBM Technical Disclosure Bulletin, Vol. 32, Nr. 5a, Oktober 1989, S. 416-417, im folgenden TDB-Dokument genannt - ist ein Speicherschutz für Chipkarten bekannt. Der Speicher der Chipkarte ist hierfür unterteilt in einen geschützten und einen ungeschützten Bereich, wobei sich in dem geschützten Bereich das Betriebssystem und spezielle Schlüssel befinden, während in dem ungeschützten Bereich eine Reihe von Anwendungsprogrammen abgelegt werden können. Der Speicher wird überwacht von einer Adreß-Dekodiereinheit. Die Adreß-Dekodiereinheit gibt ein "Wahr"-Signal aus, wenn die Adresse auf dem Adreßbus sich innerhalb des überwachten Bereiches befindet. Wenn das Anwendungsprogramm versucht, den Zugang zu dem geschützten Speicherbereich zu erlangen, erkennt dies die Adreß-Dekodiereinheit und gibt ein nicht-maskierbares Unterbrechungssignal an den Mikroprozessor. Der Mikroprozessor löscht daraufhin unmittelbar die in dem Register geladenen Daten. Auf den geschützten Bereich des Speichers kann damit nur das Betriebssystem selbst zugreifen. Anwendungsprogramme haben damit keinen Zugriff auf die in dem geschützten Speicherbereich abgelegten Schlüssel und das Betriebssystem. Problematisch an dieser Lösung ist jedoch, daß lediglich das Betriebssystem bzw. spezielle zu schützende Daten ,wie Schlüssel, gegen unerlaubte Zugriffe der Anwendungsprogramme auf der Chipkarte geschützt werden können. Untereinander können die Anwendungsprogramme jedoch völlig ungestört aufeinander zugreifen, so daß keinerlei gegenseitiger Schutz besteht.

### Zusammenfassung der Erfindung

Es ist Aufgabe der Erfindung die Integration mehrerer Anwendungsprogramme auf einer Chipkarte zu ermöglichen, ohne daß die auf der Chipkarte gespeicherten Anwendungsprogramme Zugriff aufeinander haben. Die Aufgabe der Erfindung wird durch die unabhängigen Ansprüche gelöst.

Erfindungsgemäß erfolgt eine Integration mehrerer Anwendungsprogramme auf einer Chip-Karte durch eine Trennung und Entkopplung der einzelnen Programme untereinander.

In einer ersten Ausführungsform erfolgt eine Integration von mehreren zueinander unabhängigen Einheiten bestehend jeweils aus einer Prozessor-Einheit und einer Speichereinheit. Jede dieser unabhängigen Einheiten entspricht im wesentlichen in Aufbau und Funktion dem Chip einer herkömmlichen Chipkarte mit dem entsprechenden Sicherheits- und Verschlüsselungssystem. Eine Kommunikation dieser unabhängigen Einheiten mit der Außenwelt und eventuell auch untereinander auf der Chipkarte erfolgt über eine Steuereinheit, die die einzelnen unabhängigen Einheiten 'verwaltet'. Eine Kommunikation der unabhängigen Einheiten untereinander kann nur über die jeweiligen Prozessor-Einheiten erfolgen, so daß auf die angeschlossenen Speichereinheiten nicht unter Umgehung der entsprechenden Prozessor-Einheit zugegriffen werden kann.

Die Integration mehrerer unabhängiger Einheiten auf der Chipkarte entsprechend der ersten Ausführungsform erlaubt ein einfaches und sicheres Nebeneinander von mehreren Anwendungen, ohne daß diese sich gegenseitig beeinflussen können oder einen unberechtigten Zugriff aufeinander durchführen können. Eine Chipkarte mit beispielsweise vier unabhängigen Einheiten läßt so mindestens vier unabhängige Anwendungen mit ein und derselben physischen Chipkarte bei Gewährleistung höchstmöglicher Sicherheit zu.

Da die Prozessoren für jede der unabhängigen Einheiten gleich ausgeprägt sein können, und auch im allgemeinen keine Informationen oder Geheimnisse enthalten und lediglich die entsprechenden Speicherbereiche für jede Anwendung unterschiedlich sind und eventuell Geheiminformationen enthalten, wäre eine Integration der Prozessoren der unabhängigen Einheiten wünschenswert. Auch würde eine Integration der Prozessoren zu einem einzigen Prozessor auf der Chipkarte eine deutliche Reduzierung der Kosten und des Platzbedarfes auf den Chips bedeuten, da der Prozessorteil im allgemeinen mehr Fläche auf dem Chip als der Speicherteil benötigt. Jedoch führt eine solche Integration wieder in die gleiche Problematik wie eingangs geschildert, daß eine Einflußmöglichkeit und ein unberechtigter Zugriff der Anwendungen untereinander sichergestellt werden muß.

Erfindungsgemäß erfolgt die Trennung unterschiedlicher Anwendungen auf einer Chipkarte mit einem Prozessor durch die Einfügung einer, vorzugsweise hardware-gestützten, Separation der Anwendungsteile im Speicherbereich der Chipkarte. Die Separation bewirkt, daß jede Anwendung nur auf einen festlegbaren Bereich innerhalb des Speichers zugreifen kann, und daß Zugriffe außerhalb des vorgegebenen Speicherbereiches für diese Anwendung unterbunden werden. Vorzugsweise wird der vorgebbare Zugriffsbereich einer Anwendung auf den für die Speicherung dieser Anwendung benötigten Speicherbereich, ergänzt durch einen eventuellen Pufferspeicherbereich, festgelegt. Weiterhin kann der Zugriff auf Bereiche des Speichers ermöglicht werden, die allgemein zugängliche Daten oder Betriebssystemdaten enthalten, z.B. damit allgemeine Funktionen vom Betriebssystem der Chipkarte verwendet werden dürfen.

Bei einem Zugriff einer Anwendung auf einen Speicherbereich außerhalb des für die Anwendung zulässigen Speicherbereiches, erfolgt, vorzugsweise ein nicht maskierbares (non-maskable interrupt), Unterbrechungssignal, das dann z.B. zu einer Sperrung der Chipkarte oder zu einem Rücksetzen der Anwendung, d.h. die Anwendung steht erneut vor dem ersten Schritt im 'handshaking' mit der Sendung der Zufallszahl, führen kann. In einem anderen Prozeß kann ein Speicherbereich (z.B. in dem EPROM) vorgesehen werden, worin vermerkt wird, welche Anwendung versucht hatte auf Adressen außerhalb des für sie vorgesehenen Bereiches zuzugreifen. Dieser Bereich kann dann abgefragt werden, so daß eine Sicherheitsprüfung der Anwendungen ermöglicht wird. Anstelle der nicht maskierbaren Unterbrechung kann auch der Speicherbereich außerhalb des für die Anwendung vorgesehenen Bereiches gesperrt werden, so daß ein Zugriff hierauf nicht erfolgreich ist und z.B. nur eine Nullen- oder Einsen-Kette zurückliefert.

Vorzugsweise erfolgt die Separation der Anwendungen mit Hilfe einer erfindungsgemäßen Anwendungstabelle. Die Anwendungstabelle speichert den Anfang und das Ende des Speicherbereiches, in dem eine jeweilige Anwendung gespeichert ist bzw. abläuft oder ablaufen darf - also Zugriff haben darf. Jede Anwendung bekommt den entsprechenden Speicherbereich, vorzugsweise fest, zugeteilt, z.B. beim Programmieren der Anwendung. Die Anwendungstabelle weist Informationen über eine Anfangsadresse und eine Endadresse einer jeweiligen Anwendung auf. Bei einem Aufruf einer jeweiligen Anwendung wird aus der Anwendungstabelle die Anfangs- und die Endadresse der Anwendung in dafür vorgesehene Anfangs- und Endregister geladen. Mit Hilfe eines Adreßvergleiches wird ständig überwacht, ob die Anwendung den vorgegebenen Speicherbereich verlassen hat oder nicht. Verläßt die Anwendung den für sie durch die Anfangs- und die Endadresse zugeordneten Bereich, z.B. indem sie als nächste Adresse eine Adresse außerhalb dieses Bereiches auf einen Adreßbus stellt, wird vorzugsweise ein nicht-maskierbares Unterbrechungssignal ausgelöst, das das laufende Programm der Anwendung und dessen Ausführung unterbricht. Unter einem nicht-maskierbaren Unterbrechungssignal versteht man ein von dem Anwendungsprogramm nicht abschalt- oder unterdrückbares Signal. Somit wird sichergestellt, daß das Anwendungsprogramm in einer geschlossenen Umgebung arbeitet, ähnlich der Umgebung auf einer Chipkarte mit nur einer Anwendung.

Im Gegensatz zu dem o.g. TDB-Dokument können in die Anwendungstabelle mehrere Speicherbereiche dynamisch eingetragen und somit vor einem unberechtigten Zugriff geschützt werden. Entsprechend dem genannten TDB-Dokument muß der zu schützende Bereich jedoch fest vorgegeben werden und der restliche Speicherbereich, der in sich nicht weiter geschützt werden kann, bleibt frei zugänglich, so daß Anwendungen in diesem Bereich nicht voneinander getrennt werden und somit Zugriff aufeinander haben können. Entsprechend der Lehre der Erfindung lassen sich im Gegensatz dazu mehrere Speicherbereiche definieren, die dynamisch aktiviert werden können, so daß ein aktivierter Bereich frei zugänglich ist, die nicht aktivierten Bereiche jedoch geschützt bleiben.

Die Anfangs- und Endregister werden beim Laden einer jeweiligen Anwendung mit der entsprechenden Anfangs- und Endadresse des zu aktivierenden Speicherbereiches geladen. Der Speicherbereich, in dem die Anwendung ablaufen kann, wird so dynamisch festgelegt.

Es ist zu verstehen, daß die Anfangs- und Endadressen der jeweiligen Speicherbereiche in der Anwendungstabelle so eingeschrieben werden sollten, daß eine Umdefinition dieser Adressen durch die, oder eine andere, Anwendung nicht möglich ist. Das Festlegen der Adressen in der Anwendungstabelle erfolgt deshalb vorzugsweise durch eine feste Programmierung im Betriebssystem, die zur Ladezeit der Anwendung die Adressen aus dem Inhalt der belegten Anwendungstabelle festlegt. Dieser Vorgang kann automatisch und anwendungsunabhängig durchgeführt werden. Aus den belegten Adressen kann die neue Anfangs-Adresse berechnet werden. Die End-Adresse resultiert dann aus der Größe der Anwendung. Dieser Vorgang ist transparent für alle Anwendungen und fest gesichert im Betriebssystem und gibt somit keine Angriffspunkte für eine mögliche Manipulation.

Zur Separation der Anwendungen im Speicher der Chipkarte lassen sich anstelle der Anwendungstabelle auch weitere hardwaregestützte Mittel verwenden, die vorzugsweise dynamisch mit einer jeweiligen Anwendung geladen werden und die Speicherbereiche der Anwendungen voneinander dynamisch abtrennen. Als solche Mittel können beispielsweise Registerbits, die den ausgewählten Anwendungsbereich kennzeichnen und aktivieren, dienen. Auch können mehrere getrennte Speicherbereiche über einen Selektorbaustein an den Prozessor angeschlossen werden. Die Steuerung des Selektors erfolgt vorzugsweise durch Setzen von Codierbits. Die Verwaltung und Speicherung der Zuordnung der Codierbits bzw. Registerbits zu einzelnen Anwendungen muß über ein extra ausgewiesenes Speichermedium erfolgen, ähnlich wie bei der Anwendungstabelle. Dies muß transparent für alle Anwendungen erfolgen.

In einer weiteren Ausführungsform der Erfindung erfolgt eine Separation der Anwendungen mit Hilfe eines Multiplexers, bzw. anderer elektronischer Schaltungen, die geeignet sind, aus einer bestimmten Anzahl anliegender Eingangssignale jeweils ein ausgewähltes an den Ausgang zu schalten. Ein Prozessor einer Chipkarte ist hier mit einem solchen Multiplexer verbunden, der wiederum mit einer Vielzahl von Speicherbereichen verbunden ist und dynamisch über den Multiplexer selektierbar sind. Die in den Speicherbereichen jeweils abgelegten Anwendungsprogramme können den gleichen Adreßraum belegen, d.h. alle Anwendungsprogramme können mit der gleichen Adresse beginnen. Dies erleichtert die Compilierung der Anwendungsprogramme. Die Verwaltung der Anwendungsbereiche wird einfacher, sie kommt der Programmierung der Anwendungen auf getrennten Chipkarten näher. Der Multiplexer weist vozugsweise ein Register auf, das dynamisch geladen werden kann und einen entsprechenden Bereich der Vielzahl von Speicherbereichen dem Prozessor entweder zugänglich macht oder sperrt. Diese Ausführungsform entspricht dem Abbild von mehreren Chips auf einer einzigen Chipkarte, wobei der Prozessor mehrfach genutzt wird. Das Schalten zwischen den Speicherbereichen mittels dem Multiplexer entspricht dem elektronischen Herausziehen und Ersetzen einer jeweiligen Chipkarte bzw. Speicherkarte.

Die Erfindung ermöglicht somit eine sichere und einfache Implementierung von mehreren Anwendungsprogrammen in einer Chipkarte, ohne daß die implementierten Anwendungsprogramme aufeinander Zugriff haben oder sich gegenseitig beeinflussen können.

Es ist zu verstehen, daß bestimmte Ausnahmen für einen Zugriff auf den Speicher oder auf bestimmte Speicherbereiche allgemein zugelassen werden können, z.B damit allgemeine Funktionen vom Betriebssystem verwendet werden dürfen oder um Daten, die nicht geschützt werden müssen zu lesen.

Die Erfindung findet insbesondere Anwendung für multifunktionale Chipkarten, bzw. ermöglicht erst deren sichere Einsetzbarkeit entsprechend der vorgeschriebenen Sicherheitsbedingungen.

Weitere, vorteilhafte Ausführungen der Erfindung finden sich in den Unteransprüchen.

### Beschreibung der Zeichnungen

Zur näheren Erläuterung der Erfindung sind im folgenden Ausführungsbeispiele mit Bezugnahme auf die Zeichnungen beschrieben. Funktionsgleiche Elemente sollen gleiche Bezugszeichen tragen.
- Fig. 1: zeigt eine erste erfindungsgemäße Ausführungsform einer Chipkarte zur Aufnahme einer Vielzahl von Anwendungen,
- Fig. 2: zeigt die Architektur einer weiteren Ausführungsform der Erfindung mit nur einem (gemeinsamen) Speicher und einem (gemeinsamen) Prozessor,
- Fig. 3: zeigt eine erfindungsgemäß Anordnung mit Registerbits, dargestellt für den Speicher gemäß Fig. 2,
- Fig. 4: zeigt eine erfindungsgemäß Anordnung gemäß Fig. 3, wobei als erweiterten Schutz anstelle einer Ein-Bit-Anforderung eine Kombination von mehreren Bits als Anforderungskombination implementiert ist,
- Fig. 5: zeigt eine weitere erfindungsgemäße Anordnung zur Trennung unterschiedlicher Anwendungsprogramme, worin ein Prozessor einer Chipkarte mit einem Multiplexer verbunden ist, der wiederum mit einer Vielzahl von Speicherbereichen gekoppelt ist.

### Detaillierte Beschreibung der Erfindung

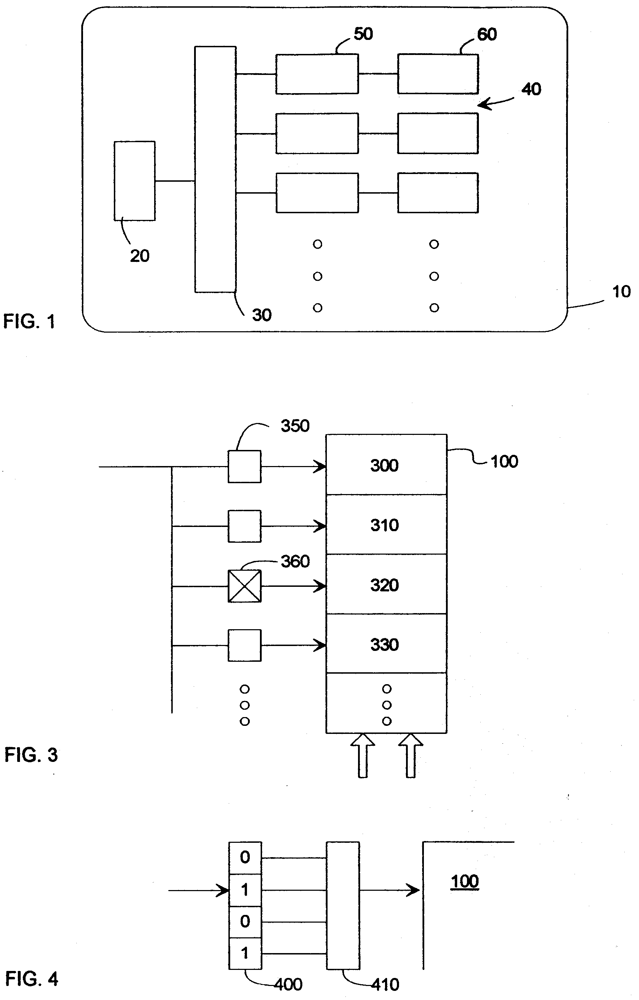

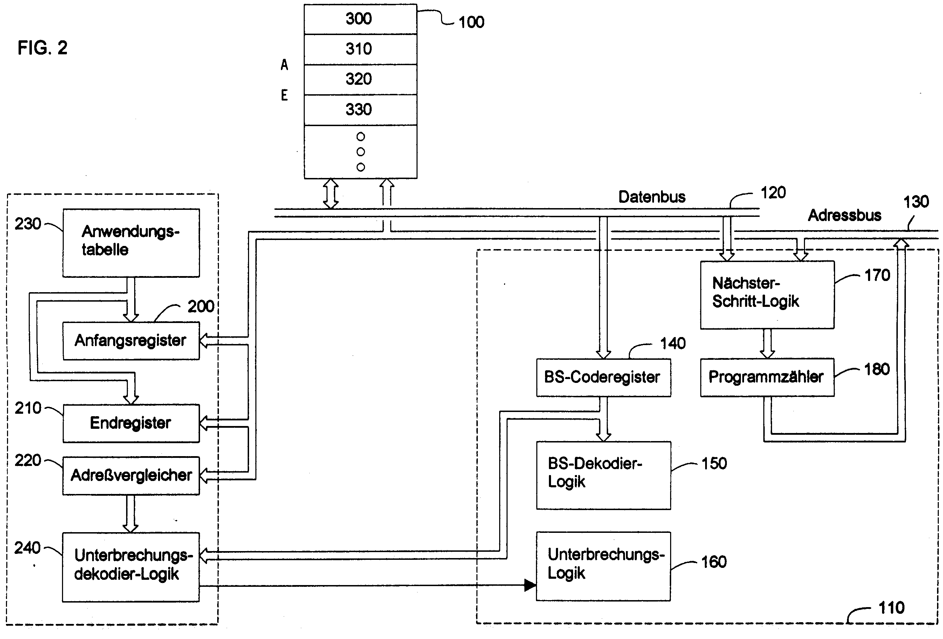

Fig. 1 zeigt eine erste erfindungsgemäße Ausführungsform einer Chipkarte 10 zur Aufnahme einer Vielzahl von Anwendungen. Die Chipkarte 10 weist ein Kontaktfeld 20 auf, das den physischen Kontakt zur Außenwelt darstellt. An das Kontaktfeld 20 schließt sich eine Steuereinheit 30 an, die wiederum mit einer Reihe von unabhängigen Einheiten 40 verbunden ist. Jede einzelne der unabhängigen Einheiten 40 besteht aus einem separaten Mikroprozessor 50 und einer separaten Speichereinheit 60. Jede einzelne der unabhängigen Einheiten 40 stellt eine abgeschlossene Funktionseinheit dar. Die jeweilige Speichereinheit 60 einer der unabhängigen Einheiten 40 ist nur über den entsprechenden, dazugehörigen Mikroprozessor 50 zugänglich und kann mittels entsprechender, im Stand der Technik bekannten, Sicherheitsverfahren geschützt werden. Ein unberechtigter Zugriff einer der unabhängigen Einheiten 40 auf eine andere der unabhängigen Einheiten 40, sowie eine entsprechende Beeinflussung untereinander kann demnach, mittels der für Chipkarten bekannten Sicherheitsvorkehrungen, unterbunden werden. In anderen Worten entspricht jede der unabhängigen Einheiten 40 funktionell einer eigenen Chipkarte. Jede der unabhängigen Einheiten 40 kann weiterhin mindestens ein Anwendungsprogramm in seinem Speicher 60 aufnehmen, wobei vorzugsweise jede der unabhängigen Einheiten 40 jeweils nur ein Anwendungsprogramm aufweist.

Die Steuerungseinheit 30 ist vorzugsweise als ein elektronischer Schalter implementiert, der von dem Automaten, mit dem die Chipkarte kommuniziert, gesteuert wird. Dieser Schalter hat die Aufgabe die Datenkontakte an die ausgewählte Anwendung in der entsprechenden unabhängigen Einheit umzulenken. Dieser Vorgang entspricht in etwa dem Auswahlvorgang aus mehreren Chipkarten und muß i.a. nicht gesondert geschützt werden.

Fig. 2 zeigt die Architektur einer weiteren Ausführungsform der Erfindung. Im Gegensatz zu der Ausführungsform in Fig. 1 weist diese Ausführungsform nur einen (gemeinsamen) Speicher 100 auf, der mit einem (gemeinsamen) Prozessorbereich 110 über einen Datenbus 120 und einen Adreßbus 130 verbunden ist. Der in Fig. 2 exemplarisch dargestellte Prozessor 110 weist, neben einer Reihe hier nicht dargestellter Funktionseinheiten, ein über den Datenbus 120 mit dem Speicher 100 verbundenes Betriebssystemcode-Register 140, das wiederum mit einer Betriebssystem-Dekodierlogik 150 verbunden ist, auf. Der Prozessor 110 enthält weiterhin eine Unterbrechungslogik 160, eine mit dem Datenbus 120 und dem Adreßbus 130 gekoppelte Nächster-Schritt-Logik 170 und einen Programmzähler 180, der sowohl mit der Nächster-Schritt-Logik 170 und dem Adreßbus 130 gekoppelt ist, auf. Weitere funktionale Einheiten des Prozessors 110 seien der Einfachheit halber hier nicht gezeigt und erwähnt.

Weiterhin mit dem Adreßbus 130 und dem Datenbus 120 verbunden, ist ein Anfangsregister 200, ein Endregister 210 und ein Adreßvergleicher 220. Das Anfangsregister 200 und das Endregister 210 sind weiter mit einer Anwendungstabelle 230 gekoppelt. Der Adreßvergleicher 220 ist mit einer Unterbrechungsdekodier-Logik 240 verbunden, die wiederum sowohl an das Betriebssystemcode-Register 140, die Betriebssystem-Dekodierlogik 150 und die Unterbrechungslogik 160 angekoppelt ist.

In dem Speicher 100 seien eine Reihe von Anwendungsprogrammen 300, 310, 320 und 330 gespeichert. Jedes der Anwendungsprogramme 300 bis 330 weist dabei eine Anfangsadresse A und eine Endadresse E, wie für das Anwendungsprogramm 320 exemplarisch gezeigt, auf. In der Anwendungstabelle 230 sind diese Anfangs- und Endadressen der in dem Speicher 100 gespeicherten Anwendungsprogramme 300 bis 330 mit einer Referenz zu dem jeweiligen Anwendungsprogramm abgelegt. Wird beispielsweise das Anwendungsprogramm 320 aufgerufen, so wird die Anfangsadresse A des Anwendungsprogrammes 320 aus der Anwendungstabelle 230 in das Anfangsregister 200 und entsprechend, die Endadresse E des Anwendungsprogrammes 320 aus der Anwendungtabelle 230 in das Endregister 210, geladen.

Während der Bearbeitung des Anwendungsprogrammes 320 vergleicht der Adreßvergleicher 220 die auf dem Adreßbus 130 für den Speicher 100 angelegten Adressen mit den in dem Anfangsregister 200 und dem Endregister 210 abgelegten Adressen. Erkennt der Adreßvergleicher 220 eine für den Speicher 100 auf dem Adreßbus 130 angelegte Adresse, die sich außerhalb des, durch die in dem Anfangsregister 200 abgelegte Anfangsadresse A und die in dem Endregister 210 abgelegte Endadresse E beschriebenen, Adreßbereiches, so initiiert der Adreßvegleicher 220 ein Signal an die Unterbrechungsdekodier-Logik 240, das wiederum auf die Unterbrechungslogik 160 wirkt. Dabei ist zu verstehen, daß sowohl das auf die Unterbrechungsdekodier-Logik 240 als auch daß auf die Unterbrechungslogik 160 wirkende Signal ein nicht maskierbares Unterbrechungssignal darstellt, das nicht, z.B. durch die Anwendung 320, unterdrückt werden kann.

Vorzugsweise werden die in der Anwendungstabelle 230 abgelegten Anfangs- und Endadressen der Anwendungsprogramme 300 bis 330 beim Laden der Anwendungsprogramme auf die Chipkarte in die Anwendungstabelle 230 fest eingespeichert und können nicht mehr, z.B. durch eines der Anwendungsprogramme 300 bis 330, verändert werden. Dies geschieht vorzugsweise durch ein Einbrennen der Adressen in einen Speicherbereich der Anwendungstabelle 230. Das Einbrennen der Adressen ist ein fest programmierter Vorgang, der nicht zugänglich ist und der immer die neuen Adressen als Ergebnis der Berechnungen aus der belegten Adressen schreibt. Damit wird gewährleistet, daß keine Überlappungen der Speicherbereiche möglich sind. Dieser Prozeß ist vorzugsweise fest in das Betriebssystem kodiert und kann nur initiiert werden. Er ist völlig transparent und nicht manipulierbar.

Durch die Anwendungstabelle 230 im Zusammenhang mit dem Anfangsregister 200, dem Endregister 210 und dem Adreßvergleicher 220 wird eine sichere Trennung der Anwendungsprogramme 300 bis 330 untereinander in dem Speicher 100 gewährleistet. Die Anwendungstabelle 230 ist vorzugsweise als ein Extraspeicher, z.B. in einem EEPROM oder einem OT-PROM der Chipkarte, aufgebaut, und hat einen eigenen, geschützten Zugriffsmechanismus.

Anstelle des Adreßvergleichers 220, der die auf dem Adreßbus 130 anliegenden Adressen ständig überwacht, kann auch ein Dekoder verwendet werden, der den, durch die Anfangs- und Endregister zugelassenen, Adreßbereich dekodiert und zuläßt. Adressen außerhalb des Bereiches werden ignoriert, die Wirkung ist z.B. als ob 'ins Leere gegriffen' wird.

Das Anfangsregister 200 und das Endregister 210 werden bei Aufruf einer der Anwendungsprogramme 300 bis 330 aus dem Speicher 100 mit den dazugehörigen Anfangs- und Endadressen aus der Anwendungstabelle 230 geladen und stellen so einen dynamischen Speicherschutz dar.

Eine Trennung der in dem Speicher 100 geladenen Anwendungsprogramme 300 bis 330 kann weiterhin auch mit Hilfe von Extra-Hardwarekomponenten, z.B. in Form von Registerbits, die dynamisch mit jedem der gespeicherten Anwendungsprogramme geladen werden, erreicht werden. Diese Extra-Registerbits können z.B. den ausgewählten Speicherbereich in dem Speicher 100 kennzeichnen und aktivieren. Dazu wird der gesamte Speicherbereich des Speichers 100, oder entsprechend auch nur Teile davon, in Blöcke aufgeteilt, die jeweils einen separaten "Enable"- oder Anforderungs-Eingang haben. Anstatt ein Aktivieren bzw. Deaktivieren von Speicherbereichen mittels der Anwendungstabelle 230 in Fig. 2, werden die entsprechenden Bereiche in dem Speicher 100 mit den Registerbits entweder aktiviert oder deaktiviert. Das Setzen der Registerbits erfolgt vorzugsweise über einen automatischen Mechanismus, der bei der Auswahl der Anwendung die entsprechenden Bits setzt. Die Zuordnung der Anwendung zu den Registerbits wird in einem speziell geschützten Speicherbereich, entsprechend dem zur Anwendungstabelle gesagten, implementiert und organisiert. Wird ein Registerbit gesetzt, kann aus dem entsprechenden Bereich in dem Speicher 100 nicht gelesen werden.

Fig. 3 zeigt eine derartige Anordnung mit Registerbits, dargestellt für den Speicher 100 gemäß Fig. 2. Der Speicher 100 ist hier entsprechend der Anwendungsprogramme 300 bis 330 in einzelne Speicherbereiche aufgeteilt. Jeder der einzelnen Speicherbereiche kann nun mittels einer Vielzahl von Anforderungsregistern 350 aktiviert bzw. deaktiviert werden. In dem in Fig. 3 gezeigten Beispiel sei nur der Speicherbereich für das Anwendungsprogramm 320 durch das Setzen eines entsprechenden Registerbits in einem diesem Speicherbereich zugeordneten Anforderungsregister 360 aktiviert.

Bei dem Beispiel in Fig. 3 ist zu verstehen, daß die Anforderungsregister 350 jeweils ein gesamtes der Anwendungsprogramme 300 bis 330, oder auch nur Teilbereiche davon, aktivieren bzw. deaktivieren kann. Eine entsprechende Feineinteilung der Speicherbereiche des Speichers 100 kann je nach Anwendung erforderlich sein, z.B. kann eine Anwendung mehrere Bits in Anspruch nehmen. Die Anzahl der Bits gibt die Größe der Anwendung an.

Die Trennung der Anwendungprogramme in dem Speicher gemäß Fig. 3 ist einfach zu implementieren, kann jedoch auch durch gewollte oder ungewollte Spannungseinwirkungen, z.B. durch kurze Spannungsstörungen, verändert werden, so daß die Registerbits in den Anforderungsregistern 350 ungewollt 'kippen' können. Anstelle von einzelnen Registerbits können deshalb Bitketten für die Aktivierung bzw. Deaktivierung der Anforderungsregister 350 verwendet werden.

Als erweiterten Schutz kann anstelle einer Ein-Bit-Anforderung eine Kombination von mehreren Bits als Anforderungskombination implementiert werden. Fig. 4 zeigt eine derartige Anordnung. Eine Anforderungskombination 400 in Fig. 4 ist über eine Dekodierlogik 410 mit dem Speicher 100 verbunden. Durch eine Kombination aus Nullen und Einsen kann das Problem vermieden werden, daß die einzelnen Bits bei Spannungsstörungen nicht alle auf Null bzw. auf Eins kippen. Die zu einer ausgewählten Anwendung gehörenden Bitketten werden beim Laden der Anwendung mit einem vordefinierten Muster geladen, das vorzugsweise aus einer Kombination von Einsen und Nullen besteht. Erst das Dekodieren des richtigen Musters erlaubt den Zugriff. Ein solches Muster läßt sich nur sehr unwahrscheinlich zufällig generieren.

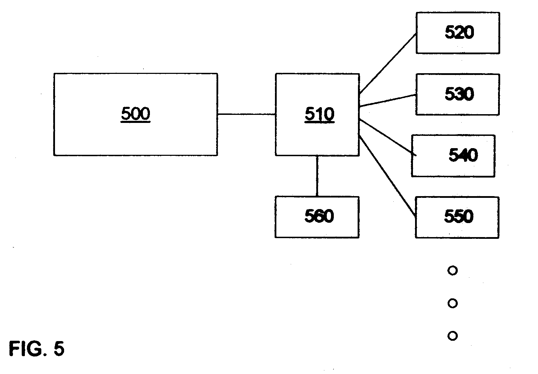

Fig. 5 zeigt eine weitere erfindungsgemäße Anordnung zur Trennung unterschiedlicher Anwendungsprogramme. Ein Prozessor 500 einer Chipkarte ist hier mit einem Multiplexer 510 verbunden, der wiederum mit einer Vielzahl von Speicherbereichen 520, 530, 540 und 550 gekoppelt ist. Die einzelnen Speicherbereiche 520 bis 550 werden bei dieser Ausführungsform dynamisch über den Multiplexer 510 selektiert. Die in den Speicherbereichen 520 bis 550 jeweils abgelegten Anwendungsprogramme können den gleichen Adreßraum belegen, d.h. alle Anwendungsprogramme können mit der gleichen Adresse beginnen. Der Multiplexer 510 weist vorzugsweise ein Register 560 auf, das dynamisch geladen werden kann und einen entsprechenden Bereich der Vielzahl von Speicherbereichen 520 bis 550 dem Prozessor 500 entweder zugänglich macht oder sperrt. Das Schalten zwischen den Speicherbereichen 520 bis 550 mittels dem Multiplexer 510 entspricht dem elektronischen Herausziehen und Ersetzen einer jeweiligen Chipkarte.

## Patentansprüche

1. Datenträgerkarte (10) zur Integration mehrerer Anwendungsprogramme mit
einer Vielzahl zueinander unabhängiger Einheiten (40) die zumindest jeweils eine Prozessoreinheit (50) und eine Speichereinheit (60) aufweisen; und
einer Steuerungseinheit (30) zur Steuerung der einzelnen unabhängigen Einheiten (40);
wobei eine Kommunikation der unabhängigen Einheiten (40) untereinander nur über die jeweiligen Prozessoreinheiten (50) durchführbar ist, so daß auf die angeschlossenen Speichereinheiten (60) nicht unter Umgehung der entsprechenden Prozessoreinheit (50) zugegriffen werden kann (Fig. 1).

2. Datenträgerkarte nach Anspruch 1, dadurch gekennzeichnet, daß jede einzelne der unabhängigen Einheiten (40) eine abgeschlossene Funktionseinheit darstellt, so daß die jeweilige Speichereinheit (60) einer der unabhängigen Einheiten (40) nur über die entsprechende, dazugehörige Prozessoreinheit (50) zugänglich ist, die mittels entsprechender Sicherheitsverfahren schützbar ist, wodurch ein unberechtigter Zugriff einer der unabhängigen Einheiten (40) auf eine andere der unabhängigen Einheiten (40), sowie eine entsprechende Beeinflussung untereinander, unterbindbar ist.

3. Datenträgerkarte nach Anspruch 1 oder 2, dadurch gekennzeichnet, daß jede der unabhängigen Einheiten (40) funktionell einer eigenen Datenträgerkarte entspricht.

4. Datenträgerkarte nach Anspruch 1-3, dadurch gekennzeichnet, daß jede der unabhängigen Einheiten (40) maximal ein Anwendungsprogramm aufweist.

5. Datenträgerkarte nach Anspruch 1-4, dadurch gekennzeichnet, daß die Steuerungseinheit (30) ein elektronischer Schalter (30) ist, der von einer Einheit, mit der die Datenträgerkarte (10) kommuniziert, gesteuert wird, wobei der Schalter (30) die Datenkontakte an die ausgewählte Anwendung in der entsprechenden unabhängigen Einheit (40) zuweist.

6. Datenträgerkarte mit einem Speicher (100), zur Aufnahme von mindestens einer Anwendung (300-330), und einem Prozessor (110), gekennzeichnet durch
ein Mittel zur Separation der mindestens einen Anwendung (300-330) in dem Speicher (100), so daß jede Anwendung nur auf einen festlegbaren Speicherbereich innerhalb des Speichers (100) zugreifen kann, und daß Zugriffe der jeweiligen Anwendung außerhalb des für die jeweilige Anwendung vorgegebenen Speicherbereiches in dem Speicher (100) unterbunden werden.

7. Datenträgerkarte nach Anspruch 6, dadurch gekennzeichnet, daß das Mittel zur Separation
eine Anwendungstabelle (230), die Informationen über eine Anfangsadresse (A) und eine Endadresse (E) des Speicherbereiches, in dem eine jeweilige Anwendung (320) Zugriff haben darf, gespeichert hat; und
ein Adreßüberwachungsmittel (220) aufweist, das die auf einem Adreßbus (130) angelegten Adressen daraufhin überwacht, ob sich diese angelegten Adressen innerhalb eines, durch die Anfangsadresse (A) und die Endadresse (E) der jeweiligen Anwendung definierten, Speicherbereiches (A bis E) der Anwendung (320) in dem Speicher (100) befindet, und eine entsprechende Maßnahme einleitet, wenn sich eine der auf dem Adreßbus (130) angelegten Adressen nicht innerhalb des Speicherbereiches (A bis E) der Anwendung (320) in dem Speicher (100) befindet.

8. Datenträgerkarte nach Anspruch 7, dadurch gekennzeichnet, daß das Adreßüberwachungsmittel (220) einen Adreß-Dekodierer aufweist, der den Bereich dekodiert und zuläßt, wobei Adressen außerhalb des Adreßbereiches ignoriert werden.

9. Datenträgerkarte nach Anspruch 7, dadurch gekennzeichnet, daß das Adreßüberwachungsmittel (220)
ein Anfangsregister (200) zur Aufnahme der Anfangsadresse (A) des Speicherbereiches in dem die jeweilige Anwendung (230) Zugriff haben darf;
ein Endregister (200) zur Aufnahme der Endadresse (E) des Speicherbereiches in dem die jeweilige Anwendung (230) Zugriff haben darf;
einen Adreßvergleicher (220), der die auf dem Adreßbus (130) angelegten Adressen mit den in dem Anfangsregister (200) und dem Endregister (210) abgelegten Adressen (A und E) vergleicht, und
ein Überwachungsmittel (240), das signalisiert, wenn eine der angelegten Adressen sich nicht innerhalb des, durch die in dem Anfangsregister (200) und dem Endregister (210) abgelegten Adressen (A und E) definierten Adreßbereiches (A bis E) der Anwendung (320) in dem Speicher (100) befindet, aufweist (Fig. 2).

10. Datenträgerkarte nach Anspruch 6, dadurch gekennzeichnet, daß das Mittel zur Separation eine Vielzahl von Registermitteln (350) aufweist, die einen ausgewählten Speicherbereich in dem Speicher (100) kennzeichnen und den Speicherbereich aktivieren oder deaktivieren können (Fig. 3).

11. Datenträgerkarte nach Anspruch 10, dadurch gekennzeichnet, daß mindestens eines der Vielzahl von Registermitteln (350) ein Anforderungskombinationsmittel (400) und eine Dekodierlogik (410) aufweist (Fig. 4).

12. Datenträgerkarte nach Anspruch 6, dadurch gekennzeichnet, daß das Mittel zur Separation einen Multiplexer (510) aufweist, der mit einer Vielzahl von Speicherbereichen (520, 530, 540, 550) verbunden ist, wobei die einzelnen Speicherbereiche (520, 530, 540, 550) dynamisch über den Multiplexer (510) selektierbar sind (Fig. 5).

13. Datenträgerkarte nach Anspruch 12, dadurch gekennzeichnet, daß in den Speicherbereichen (520, 530, 540, 550) jeweils abgelegte Anwendungsprogramme den gleichen Adreßraum belegen, so daß diese Anwendungsprogramme mit der jeweils gleichen Anfangsadresse beginnen.

14. Datenträgerkarte nach Anspruch 12 oder 13, dadurch gekennzeichnet, daß der Multiplexer (510) ein Register (560) aufweist, das dynamisch geladen werden kann und einen entsprechenden Bereich der Vielzahl von Speicherbereichen (520-550) dem Prozessor (500) entweder zugänglich macht oder sperrt.

15. Verfahren zur Überwachung des Zugriffes einer Anwendung (320) gespeichert in einem Speicher (100) in einer Datenträgerkarte, mit
einem Vergleichen der auf einem Adreßbus (130) der Datenträgerkarte angelegten Adressen mit einem vorgegebenen Adreßbereich (A bis E) der Anwendung (320) in dem Speicher (100); und
einem Signalisieren, wenn eine der angelegten Adressen mit dem vorgegebenen Adreßbereich (A bis E) der Anwendung (320) in dem Speicher (100) nicht übereinstimmt.

16. Verfahren nach Anspruch 15, wobei ein nicht-maskierbares Unterbrechungssignal ausgelöst wird, wenn eine der angelegten Adressen mit dem vorgegebenen Adreßbereich (A bis E) der Anwendung (320) in dem Speicher (100) nicht übereinstimmt.

17. Verfahren nach Anspruch 16, wobei ein laufendes Programm der Anwendung und dessen Ausführung unterbrochen wird und/oder die Datenträgerkarte gesperrt wird und/oder die Anwendung rückgesetzt wird.

18. Verfahren nach Anspruch 15-17, wobei vermerkt wird, welche Anwendung versucht hatte auf Adressen außerhalb des für sie vorgesehenen Bereiches zuzugreifen.

19. Verfahren nach Anspruch 15, wobei der Speicherbereich außerhalb des für die Anwendung vorgesehenen Bereiches gesperrt wird, so daß ein Zugriff hierauf nicht erfolgreich ist, wenn eine der angelegten Adressen mit dem vorgegebenen Adreßbereich (A bis E) der Anwendung (320) in dem Speicher (100) nicht übereinstimmt.

20. Verfahren nach Anspruch 19, wobei der Zugriff auf den gesperrten Bereich eine Nullen- oder Einsen-Kette liefert, die keinen Bezug zu dem tatsächlichen Inhalt dieses Bereiches aufweist.

21. Verfahren nach Anspruch 15-20, wobei bei Aufruf der Anwendung (320)
- eine Anfangsadresse (A) der Anwendung (320) in ein Anfangsregister (200) und eine Endadresse (E) der Anwendung (320) in ein Endregister (210) geladen wird,
- während der Bearbeitung der Anwendung (320) ein Adreßvergleicher (220) die auf dem Adreßbus (130) für den Speicher (100) angelegten Adressen mit den in dem Anfangsregister (200) und dem Endregister (210) abgelegten Adressen vergleicht, und,
- wenn der Adreßvergleicher (220) eine für den Speicher (100) auf dem Adreßbus (130) angelegte Adresse erkennt, die sich außerhalb des, durch die in dem Anfangsregister (200) abgelegte Anfangsadresse (A) und die in dem Endregister (210) abgelegte Endadresse (E) beschriebenen, Adreßbereiches befindet,
- der Adreßvergleicher (220) ein nicht-maskierbares Unterbrechungssignal initiiert, das nicht durch die Anwendung (320) unterdrückt werden kann.

22. Verfahren nach Anspruch 21, wobei die Anfangsadresse (A) und die Endadresse (E) der Anwendung (320) aus einer Anwendungstabelle (230) geladen werden.

23. Verfahren nach Anspruch 22, wobei die Anfangsadresse (A) und die Endadresse (E) der Anwendung (320) in die Anwendungstabelle (230) fest eingespeichert wurden, so daß diese nicht mehr verändert werden können.

24. Verfahren nach Anspruch 22 oder 23, wobei die Anfangsadresse (A) und die Endadresse (E) der Anwendung (320) in die Anwendungstabelle (230) bei einem ersten Speichern der Anwendung (230) in dem Speicher (100) eingebrannt werden.

25. Verfahren nach Anspruch 15-20, wobei bei Aufruf der Anwendung (320)
- entsprechende, den vorgegebenen Adreßbereich (A bis E) der Anwendung (320) kennzeichnende Registermittel geladen werden,
- die geladenen Registermittel den vorgegebenen Adreßbereich (A bis E) der Anwendung (320) aktivieren, während andere Adreßbereiche des Speichers (100) deaktiviert bleiben, so daß ein Zugriff der Anwendung (230) nur auf die aktivierten Adreßbereiche ermöglicht wird.

26. Verfahren nach Anspruch 15-20, wobei bei Aufruf der Anwendung
- ein Multiplexer (510) der Anwendung einen entsprechenden, vorgegebenen Speicherbereich (520-540) zuteilt.

27. Verwendung des Verfahrens oder der Datenträgerkarte entsprechend einem der vorstehenden Ansprüchen in Chipkarten.
